# NEUE EUROPÄISCHE PATENTSCHRIFT

(11) **EP 0 087 084 B2**
(45) Veröffentlichungstag und Bekanntmachung des Hinweises auf die Entscheidung über den Einspruch: **02.03.1994**
(45) Hinweis auf die Patenterteilung: 16.09.1987
(21) Anmeldenummer: 83101335.4
(22) Anmeldetag: 11.02.1983
(51) Int. Cl.: B60H 1/00, G05G 1/00, B60Q 3/04

(54) **Steuergerät mit beleuchteten Betätigungsknöpfen für Heizungs-,Klima- und Lüftungsanlagen in Kraftfahrzeugen**
Control device with illuminated control knobs for heating, cooling and ventilating installations in motor vehicles
Dispositif de commande à boutons de commande illuminés pour installations de chauffage, de climatisation et de ventilation dans véhicules moteur

(30) Priorität: 22.02.1982 DE 3206288
(43) Veröffentlichungstag der Anmeldung: 31.08.1983
(73) Patentinhaber: SIEMENS AKTIENGESELLSCHAFT, 80333 München (DE)
(72) Erfinder: Hildebrand, Reinhard, D-8621 Redwitz (DE); Waldmann, Bernd, D-8621 Redwitz (DE)

(56) Entgegenhaltungen:
- EP-A- 0 000 046
- DE-A- 2 336 506
- DE-A- 2 361 696
- DE-A- 2 418 226
- DE-A- 2 852 452
- DE-B- 1 129 388
- DE-B- 1 655 102
- DE-C- 898 858
- FR-A- 2 352 336
- FR-A- 2 446 737
- FR-A- 2 511 522
- GB-A- 1 287 120
- US-A- 2 933 942
- US-A- 3 589 206
- US-A- 3 755 662

## Beschreibung

### Steuergerät mit beleuchteten Betätigungsknöpfen für Heizungs-, Klima- und Lüftungsanlagen in Kraftfahrzeugen

Die Erfindung betrifft ein Steuergerät gemäß Oberbegriff des Anspruchs 1. Ein derartiges Steuergerät ist durch eine offenkundige Vorbenutzung bekannt; als federnde Elemente werden dabei Metallfedern vorgesehen.

Aufgabe der Erfindung ist es, mit einfachen Mitteln ein selbstverriegelbares Steuergerät mit beleuchteten Knopfen zu schaffen, das bei leichter Bedienung und genauer Einstellmöglichkeit die geradlinige oder leicht gekrümmte Bewegung eines Betätigungshebels in eine kreisförmige Bewegung eines Stellhebels umsetzt.

Diese Aufgabe wird durch den Gegenstand des Patentanspruchs 1 gelöst.

Durch unterschiedliche Vorspannung des elastischen Kunststoffs lassen sich in weitem Bereich die Verstellkräfte auf einfache Weise variieren und- eine bedienungsoptimale feinfühlige Einstellung unterschiedlicher Positionen des Betätigungshebels gewährleisten.

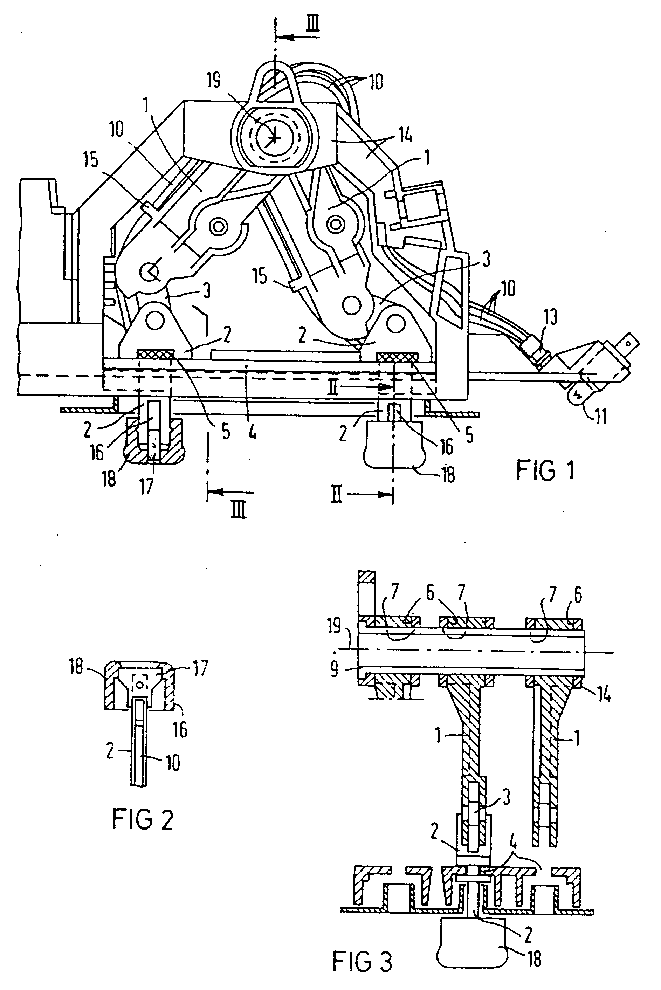

Zur Veranschaulichung der Erfindung dient die Zeichnung. In dieser zeigt
- FIG 1: eine Seitenansicht eines erfindungsgemäßen Steuergeräts,
- FIG 2: eine Seitenansicht eines Betätigungsknopfes 18 im Schnitt II-II und
- FIG 3: einen Schnitt III-III des Grundkörpers 14.

Ein Einbau von federnden Elementen 5 im Stellhebel 1 oder im Betätigungshebel 2 hat sich vielfach als günstig erwiesen. Es werden hierdurch die erforderlichen Betätigungs- und/oder Rastkräfte gewährleistet.

Zum Abstimmen der Verstellkräfte des Betätigungshebels, was bislang durch Metallfedern erfolgte, hat sich der Einbau von federnden Elementen 5, welche unter Vorspannung gegen ein ruhendes Bauteil gepreßt werden können, bewahrt. Als besonders geeignet erwies sich ein elastisches Kunststoffteil im Stell- und/oder Betätigungshebel. Die Kräfte können durch die Größe der Vorspannung eingestellt werden.

Eine Ausbildung der Lagerung des Stellhebels 1 mit Schlitzen in der Aufnahme mit einer Bohrung 7 durch die einzelnen Rippen 6, die Bestandteil des Grundkörpers 14 oder eines separaten Bauteils sein können, ermöglicht, daß mindestens ein Stellhebel 1, der eine kreisförmige Bewegung beschreibt, in einer Achse gelagert werden kann. Bei dieser besonders vorteilhaften Ausführung gemäß der Erfindung kann der Drehpunkt durch Bohrungen gebildet sein, in die ein steckbarer Bolzen, vorzugsweise aus Kunststoff, einrastet. Anstelle des Bolzens können an den-Stellhebeln 1 auch Führungsringe 9 angebracht sein, die bei der Montage die Rippen 6 der Aufnahme spreizen und in die Bohrungen 7 einrasten.

Die Betätigungsknöpfe 18 sind mittels beweglicher Lichtleiter 10 beleuchtet. Ausgehend von einer Beleuchtungsquelle 11 können mehrere Lichtleiter 10 in einer Hülse 13 gefaßt sein. Die einzelnen Lichtleiter sind am Grundkörper 14 mittels Durchbrüchen zum Drehpunkt 19 des Stellhebels 1 geführt und von dort durch geeignete Führungen 15 an den Stellhebel 1 mitten durch den Betätigungshebel 2. Gegen Ausweichen nach hinten sind sie mit einer (Aderend-)Hülse 16 gesichert. Die Streuung des punktförmig ankommenden Lichtstrahls erfolgt vorteilhafterweise durch ein glasklares Kunststoffteil 17, insbesondere ein PMMA-Teil geeigneter Form.

## Patentansprüche

1. Steuergerät mit Betätigungsknöpfen (18) für Heizungs-, Klima- und Lüftungsanlagen in Kraftfahrzeugen, bestehend aus einem Grundkörper (14), mindestens einem Stellhebel (1) und mindestens einem durch ein federndes Element (5) gegen ein ruhendes Bauteil abgestützten Betätigungshebel (2), wobei das Steuergerät jeweils zwischen dem drehbar gelagerten Stellhebel (1) und dem linear verschiebbaren Betätigungshebel (2), der ein Element einer Gleitführung ist, einen Zwischenhebel (3) aufweist, der sowohl am Betätigungshebel (2) als auch am Stellhebel (1) in einem Gelenk ausschließlich drehbar gelagert ist, wobei ferner die Betätigungsknöpfe mittels Lichtleiter (10) beleuchtet sind, der Grundkörper (14) aus Kunstoff hergestellt ist und die Längsachse des Zwischenhebels (3) mit der Führungsbahn (4) des Betätigungshebels (2) in einer Endlage einen Winkel von 90 ± 10° bildet, **gekennzeichnet durch** ein vorgespanntes, elastisches, nicht federformiges Kunststoffteil im Stell- und/oder Betätigungshebel als federndes Element (5).

2. Steuergerät nach Anspruch 1, **dadurch gekennzeichnet**, daß die Lagerung der Stellhebel (1) als geschlitzte Aufnahme mit einer Bohrung (7) durch einzelne Rippen (6) ausgebildet ist.

3. Steuergerät nach Anspruch 2, **dadurch gekennzeichnet**, daß als Drehachse der Stellhebel (1) ein in die Bohrungen (7) steckbarer Bolzen dient.

4. Steuergerät nach Anspruch 2, **dadurch gekennzeichnet**, daß die Drehachse von einem am Stellhebel (1) angebrachten Führungsring (9) gebildet wird, der in die Bohrung (7) einrastet.

## Claims

1. Control device with control knobs (18) for heating, air-conditioning and ventilation installations in motor vehicles, comprising a main body (14), at least one adjustment lever (1) and at least one actuation lever (2) supported by a resilient element (5) against a stationary component, wherein in each case the control device has, between the rotatably mounted adjustment lever (1) and the linearly movable actuation lever (2), which is an element of a sliding control, an intermediate lever (3) which is exclusively rotatably mounted both on the actuation lever (2) and on the adjustment lever (1) in a coupling, wherein, moreover, the control knobs are illuminated by means of light conductors (10), the main body (14) is made of plastics, and the longitudinal axis of the intermediate lever (3) forms an angle of 90 ± 10° with the guide path (4) of the actuating lever (2) in a final position, characterised by a prestressed, resilient, non-spring-shaped plastics part in the adjustment and/or actuating lever as the resilient element (5).

2. Control device according to claim 1, characterised in that the mounting of the adjustment lever (1) is formed as a slotted receiving portion with a bore (7) by individual ribs (6).

3. Control device according to claim 2, characterised in that a pin which can be pushed into the bores (7) is used as the axis of rotation of the adjustment lever (1).

4. Control device according to claim 2, characterised in that the axis of rotation is formed by a guide ring (9) fitted on the adjustment lever (1), which engages into the bore (7).

## Revendications

1. Appareil de commande à boutons de manoeuvre (18) pour des installations de chauffage, de conditionnement d'air et de ventilation dans des véhicules automobiles, comprenant une embase (14), un levier de positionnement (1) et au moins un levier de manoeuvre (2) appuyé par l'intermédiaire d'un élément élastique (5) sur un élément fixe, l'appareil de commande ayant, entre le levier de positionnement (1) monté rotatif et le levier de manoeuvre (2) déplaçable linéairement et qui est un élément d'un guide de coulisse, un levier intermédiaire (3) qui est monté de manière à pouvoir exclusivement pivoter sur le levier de manoeuvre (2) ainsi que sur le levier de positionnement (1), dans une articulation, et dans lequel les boutons de manoeuvre sont en outre éclairés au moyen de fibre optique (10), l'embase (14) est en matière plastique, et l'axe longitudinal du levier intermédiaire (3) fait un angle de 90 ± 10° avec la glissière (4) du levier de manoeuvre (2), dans une position d'extrémité, caractérisé par une pièce en matière plastique élastique précontrainte, non en forme de ressort, servant d'élément élastique (5) dans le levier de positionnement et/ou dans le levier de manoeuvre.

2. Appareil de commande suivant la revendication 1, caractérisé par le fait que le support du levier de positionnement (1) est réalisé sous la forme d'un logement fendu comportant un perçage (7) traversant des nervures (6).

3. Appareil de commande suivant la revendication 2, caractérisé par le fait qu'on utilise comme axe de rotation des leviers de positionnement (1), un axe pouvant être enfilé dans les perçages (7).

4. Appareil de commande suivant la revendication 2, caractérisé par le fait que l'axe de rotation est formé d'une bague de guidage (9), qui est montée sur le levier de positionnement (1) et qui s'encliquette dans le perçage (7).
